# EUROPÄISCHE PATENTSCHRIFT

(11) **EP 2 277 158 B1**
(45) Veröffentlichungstag und Bekanntmachung des Hinweises auf die Patenterteilung: **23.10.2013**
(21) Anmeldenummer: 08749156.9
(22) Anmeldetag: 25.04.2008
(51) Int. Cl.: G09B 23/30, A61N 5/00

(54) **AUGENMODELL ZUR VERWENDUNG IN OPHTHALMOLOGISCHEN MESSUNGEN**
EYE MODEL FOR USE IN OPHTHALMOLOGICAL MEASUREMENTS
MODÈLE D' OEIL DESTINÉ AUX MESURES OPHTALMOLOGIQUES

(43) Veröffentlichungstag der Anmeldung: 26.01.2011
(73) Patentinhaber: WaveLight GmbH, 91058 Erlangen (DE)
(72) Erfinder: SCHMID, Stefan, 91560 Heilsbronn (DE); DONITZKY, Christof, 90542 Eckental (DE)
(74) Vertreter: Katérle, Axel
(86) Internationale Anmeldenummer: PCT/EP2008/003382
(87) Internationale Veröffentlichungsnummer: WO 2009/129829

(56) Entgegenhaltungen:
- WO-A-94/16425
- US-A- 5 713 893
- US-A- 5 772 656
- US-A1- 2008 139 082

## Beschreibung

Die Erfindung betrifft ein Augenmodell zur Verwendung in ophthalmologischen Messungen, mit einer Nachbildung mindestens einer Augenstruktur.

Bei einer Vielzahl von Messmethoden, mit denen Eigenschaften von Augen gemessen werden, wird elektromagnetische Strahlung (nachfolgenden kurz: Licht) auf und/oder in das zu untersuchende Auge gestrahlt und die vom Auge zurückgeworfene Strahlung erfasst und ausgewertet. In der zurückgeworfenen Strahlung spiegelt sich die Beeinflussung des Lichts durch die verschiedenen Elemente des Auges wider, weshalb sich durch Aufnahme der vom Auge zurückgeworfenen Strahlung Aussagen über Eigenschaften des Auges, beispielsweise über krankhafte Veränderungen, treffen lassen. Die vom Auge zurückgeworfene Strahlung wird bei einer Vielzahl von Messtechniken mittels einer Kamera, insbesondere einer elektronischen Kamera, aufgenommen. Ein Beispiel für ein kamerabasiertes System zur Augenuntersuchung ist das sogenannte Scheimpflug-Kamerasystem, mit dem insbesondere die Kornea und die Augenlinse untersucht werden können. Die Scheimpflug-Fotografie ermöglicht bekanntermaßen eine scharfe Abbildung einer Objektebene (Gegenstandsebene), die schräg zur Bildebene des Kamerasystems steht.

Bei der ophthalmologischen Scheimpflug-Fotografie wird das Auge mit einem Spaltprojektor schichtartig durchleuchtet. Dabei wird schräg zur optischen Achse des einfallenden Lichts aus dem Auge durch Streuung austretendes Licht fotografiert, vgl. DE 299 13 602 U1. Derart erzeugte Lichtschnittaufnahmen in der Scheimpflugtechnik benötigen häufig eine Überprüfung durch Referenzmessungen. Zur Durchführung dieser Referenzmessungen können künstlich nachgebildete Augenmodelle herangezogen werden. Solche Augenmodelle, die eine oder mehrere Augenstrukturen nachbilden, finden in der ophthalmologischen Forschung und Praxis neben dem Einsatz für Vergleichs- oder Kalibriermessungen auch Anwendung bei der Entwicklung neuer Messtechniken oder -geräte.

Ein beispielhaftes Augenmodell ist aus US 7,066,598 B2 bekannt. Das dortige Augenmodell weist unter anderem Nachbildungen der Kornea und der Linse eines menschlichen Auges auf. Die Nachbildungen bestehen aus einem Acrylkunststoff, der mit Streustoffen dotiert ist, um die Streueigenschaften der realen Vorbilder nachzuahmen.

Es hat sich allerdings gezeigt, dass das tatsächliche Streuverhalten des Auges auf diese Weise nur unzulänglich nachgeahmt werden kann. Dies hängt damit zusammen, dass eine Dotierung eines die Kornea oder die Linse nachbildenden Kunststoffkörpers mit Pigmenten oder anderen Streustoffen zwar dazu führt, dass eine Volumenstreuung von Licht in dem Imitationskörper stattfindet. Allerdings unterliegt das Licht einer Mehrfachstreuung an allen streuenden Grenzflächen und Streustoffen, auf die es trifft. Die Mehrfachstreuung führt zu einer Aufweitung des Streulichtstrahls, aufgrund dessen Grenzflächen und Konturen nicht mit der gewünschten Schärfe erfasst werden können.

Demgegenüber beruht die Erfindung auf der Erkenntnis, dass im menschlichen Auge die Lichtstreuung an den Grenzflächen und Zellstrukturen eine Vorzugsrichtung hat. Dies hängt insbesondere damit zusammen, dass die einzelnen Zellschichten innerhalb der Linse und der Kornea näherungsweise parallel zur Oberfläche verlaufen. Anders als bei transluzenten Imitationsmaterialen mit einer homogenen Verteilung von Streustoffen wird beim menschlichen Auge im wesentlichen nur Licht aus dem unmittelbar beleuchteten Augenbereich als Streulicht wahrgenommen, d. h. es findet keine wesentliche Aufweitung des Streulichtstrahls statt. Dies gestattet eine konturscharfe fotografische Aufnahme des beleuchteten Bereichs.

Im Lichte obiger Erkenntnis ist es die Idee der Erfindung, Untersuchungen eines Augenmodells nicht auf Streulichtbasis durchzuführen sondern auf Basis von Fluoreszenzemissionen. Erfindungsgemäß wird ein solches Augenmodell in Übereinstimmung mit Anspruch 1 zur Überprüfung eines in ophthalmologischen Messungen eingesetzten, eine Scheimpflug-Kamera und einen Spaltprojektor umfassenden Kamerasystems verwendet. Bei dem verwendeten Augenmodell besitzt dementsprechend die Nachbildung einer Augenstruktur fluoreszierende Eigenschaften. Insbesondere enthält das Material der Nachbildung solche Fluorophore, die bei Anregung durch eine Anregungsstrahlung Licht einer längeren Wellenlänge als die Anregungsstrahlung emittieren. Wegen seiner größeren Wellenlänge kann das emittierte Fluoreszenzlicht keine weiteren fluoreszierenden Teilchen in dem Augenmodell zur Fluoreszenz anregen. Im Fluoreszenzlicht zeichnen sich daher die Konturen des beleuchteten Bereichs scharf ab. Die bei streulichtbasierten Aufnahmen wegen der Mehrfachstreuung zu beobachtende Unschärfe kann bei der Fluoreszenzlichtfotografie vermieden werden.

Zum Stand der Technik bezüglich künstlich nachgebildeter Augenstrukturen ist ferner auf die WO 94/16425 A1, die US 5, 713,893 sowie die US 5,772,656 zu verweisen. In diesen drei Druckschriften wird die nachgebildete Augenstruktur jeweils zur Überprüfung/Kalibrierung eines zur Ablation von kornealem Augengewebe eingesetzten Lasers verwendet.

Bevorzugte Weiterbildungen der Erfindung sind in den abhängigen Ansprüchen angegeben.

Das Augenmodell kann insbesondere eine Korneanachbildung oder/und eine Linsennachbildung aufweisen, welche die Kornea bzw. die Augenlinse geometrisch modelliert und fluoreszierendes Material enthält. Auch der Glaskörper des Auges kann in dem Augenmodell nachgebildet sein. Das fluoreszierende Material kann homogen in der Nachbildung verteilt sein, sodass sich im gesamten Volumen der Nachbildung gleiche Fluoreszenzeigenschaften einstellen. Es ist alternativ vorstellbar, das fluoreszierende Material inhomogen in der Nachbildung der betreffenden Augenstruktur zu verteilen. Auf diese Weise können unterschiedliche Gewebeschichten innerhalb der Kornea, der Linse oder einer anderen Augenstruktur simuliert werden. Beispielsweise kann die Nachbildung mehrere Bereiche unterschiedlicher Konzentration des fluoreszierenden Materials enthalten, wobei zweckmäßigerweise innerhalb jedes Bereichs das fluoreszierende Material im wesentlichen homogen verteilt ist. So kann beispielsweise ein Katarakt (Grauer Star) in der Linse simuliert werden. Dahinter steht die Überlegung, dass eine unterschiedliche Konzentration des fluoreszierenden Materials im Grundmaterial der Nachbildung zu einer unterschiedlich intensiven Fluoreszenzemission führt. Als Grundmaterial der Nachbildung wird vorzugsweise ein transparentes Material verwendet, also ein Material ohne wesentliche Volumenstreuung. Beispielsweise kann ein Kunststoffmaterial hierfür verwendet werden, etwa Plexiglas (PMMA: Polymethylmethacrylat). Fluoreszierende Plexiglaskörper sind in unterschiedlichen Farben handelsüblich erhältlich, beispielsweise in Platten- oder Stabform. Aus solchen Materialen ist eine Fertigung der Nachbildung(en) ohne weiteres möglich.

Es ist im Übrigen auch vorstellbar, in einer nachgebildeten Augenstruktur oder zumindest in einen Teilbereich davon die Konzentration des fluoreszierenden Materials kontinuierlich zu verändern, so dass die Konzentration bzw. der Konzentrationsverlauf durch einen Gradienten beschrieben werden kann. Eine solche Verteilung des fluoreszierenden Materials kann insbesondere zur Nachbildung der humanen Linse gewählt werden.

Alternativ oder zusätzlich zu einer Variation der Konzentration des fluoreszierenden Materials können in dem Augenmodell fluoreszierende Stoffe eingesetzt werden, die Fluoreszenzlicht unterschiedlicher Farbe emittieren. Beispielsweise ist es vorstellbar, die Kornea durch einen ersten Körper nachzubilden, der Fluoreszenzlicht einer ersten Farbe emittiert, und die Linse durch einen zweiten Körper nachzubilden, der Fluoreszenzlicht einer zweiten Farbe emittiert. Ebenso ist es vorstellbar, innerhalb einer nachgebildeten Augenstruktur unterschiedliche Bereiche mit fluoreszierenden Stoffen zu dotieren, die unterschiedliche Farben emittieren. Auf diese Weise können beispielsweise verschiedene Schichten der Kornea (Epithel, Stroma, usw.) oder der Linse (Kapsel, Rinde, Kern, usw.) durch unterschiedliche Farben dargestellt werden.

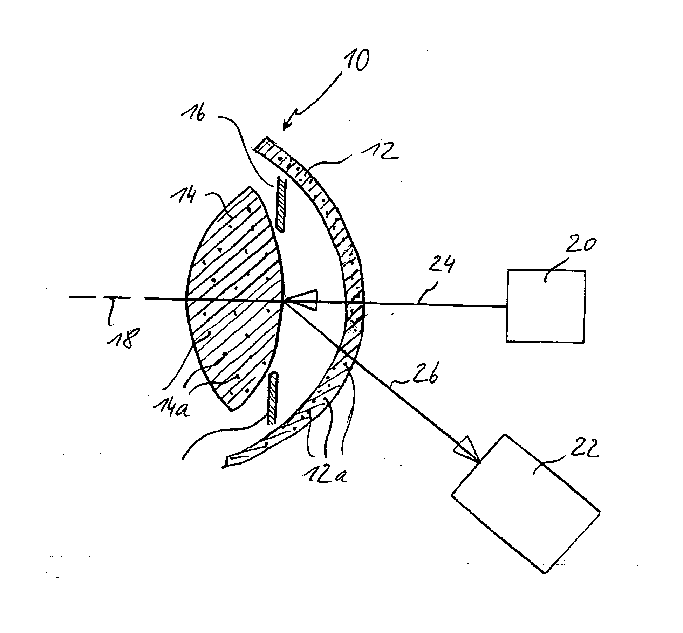

Nachfolgend wird ein Ausführungsbeispiel einer Einrichtung zur ophthalmologischen Vermessung eines Augenmodells anhand der beigefügten einzigen Figur erläutert. Schematisch ist dort ein künstliches Augenmodell 10 mit einer Korneanachbildung 12, einer Linsennachbildung 14 und einer Irisnachbildung 16 gezeigt. Die beim menschlichen Auge zwischen Kornea und Linse befindliche vordere Augenkammer ist bei dem Augenmodell 10 vorzugsweise ebenfalls nachgebildet, etwa aus einem Kunststoffmaterial oder einer Flüssigkeit. In jedem Fall sollte die Nachbildung der Augenvorderkammer ähnlich wie die natürliche Augenvorderkammer keine Streueigenschaften besitzen und außerdem keine Fluoreszenzeigenschaften besitzen.

Dagegen besitzen bei dem Augenmodell 10 sowohl die Korneanachbildung 12 als auch die Linsennachbildung 14 fluoreszierende Eigenschaften. Die beiden Nachbildungen sind hierfür aus einem transparenten Grundmaterial gebildet, in das ein fluoreszierendes Material eingelagert ist. Zum Zwecke der Darstellung ist in der Figur das fluoreszierende Material durch punktförmige Teilchen angedeutet, die mit 12a bzw. 14a bezeichnet sind. Beispielsweise sind die Korneanachbildung 12 und die Linsennachbildung 14 aus fluoreszierendem Plexiglas hergestellt. Die Farbe der Fluoreszenzemission der Korneanachbildung 12 und der Linsennachbildung 14 kann verschieden sein; beispielsweise könnte eine der beiden Nachbildungen im grünen Wellenlängenbereich emittieren, während die andere Nachbildung im gelben Wellenlängenbereich emittiert. Genauso kann die Fluoreszenzemission der beiden Nachbildungen 12, 14 im wesentlichen die gleiche Farbe haben.

Die Irisnachbildung 16 kann bei Bedarf ebenfalls aus einem Material mit fluoreszierenden Eigenschaften gebildet sein.

Die optische Achse des Augenmodells 10 ist in der Figur mit 18 bezeichnet. Die einzelnen Elemente des Augenmodells 10 sind im wesentlichen rotationssymmetrisch um die optische Achse 18 ausgebildet, wie dies näherungsweise dem natürlichen Auge entspricht. Für eine genaue geometrische Simulation des realen Auges kann zumindest ein Teil der nachgebildeten Flächen mit torischer oder asphärischer Krümmung ausgeführt oder sogar mehrfach gekrümmt sein. Selbstverständlich kann alternativ oder zusätzlich mit sphärisch gekrümmten Flächen bei der Erstellung des Augenmodells und einzelner Augenstrukturen gearbeitet werden.

Zur fotografischen Aufnahme der nachgebildeten Augenstrukturen dienen ein Spaltprojektor 20 sowie eine Scheimpflugkamera 22, wobei die Scheimpflugkamera 22 vorzugsweise eine elektronische (digitale) Kamera ist. Der Spaltprojektor 20 richtet in an sich bekannter Weise einen Spaltstrahl 24 (eine "Lichtscheibe") längs der optischen Achse 18 auf das Augenmodell 10. Der Spaltstrahl 24 besteht beispielsweise aus Schwarzlicht (UV-Licht). Wegen der Transparenz des Grundmaterials der beiden nachgebildeten Körper 12, 14 durchschneidet der Spaltstrahl 24 die Korneanachbildung 12 und die Linsennachbildung 14 und regt dabei das fluoreszierende Material 12a, 14a zur Fluoreszenzemission an. Das emittierte Fluoreszenzlicht gelangt seitwärts aus dem Augenmodell 10 heraus, wie durch einen Pfeil 26 angedeutet ist, und wird mit der Scheimpflugkamera 22 erfasst. Die Scheimpflugkamera 22 kann mit geeigneten Filtermitteln ausgeführt sein, welche im wesentlichen nur durchlässig für die Fluoreszenzwellenlänge des fluoreszierenden Materials 12a, 14a sind, so dass allein das emittierte Fluoreszenzlicht auf den Bildsensor der Scheimpflugkamera 22 fällt. Etwaige Streulichteinflüsse, die nicht auf Fluoreszenzemission beruhen, können auf diese Weise unterdrückt werden, insbesondere wenn das von dem Spaltprojektor 20 ausgesendete Anregungslicht Wellenlängen im sichtbaren Bereich enthält.

Die in der Figur gezeigte Messeinrichtung kann auf diese Weise Referenzbilder eines Auges liefern, die zur Kalibrierung und Referenzierung des Kamerasystems herangezogen werden können, also um festzustellen, ob das System aus Spaltprojektor 20 und Scheimpflugkamera 22 überhaupt richtige Abbildungen liefert, die dem zu vermessenden Objekt entsprechen. Ferner können die gewonnen Bilddaten für Vergleiche mit Bildern verwendet werden, die am lebenden Auge gewonnen werden.

Das Augenmodell 10 kann auch für andere ophthalmologische Zwecke als die Scheimpflug-Fotografie eingesetzt werden. Beispielsweise kann es als Übungsobjekt für Spaltlampenuntersuchungen verwendet werden. Es ist auch vorstellbar, in die Linsennachbildung 14 künstliche Katarakte einzubringen, etwa mit stark fokussierter Laserstrahlung hinreichender Leistung, um damit Messgeräte zu eichen.

## Patentansprüche

1. Verwendung eines Augenmodells zur Überprüfung eines in ophthalmologischen Messungen eingesetzten, eine Scheimpflug-Kamera (22) und einen Spaltprojektor (20) umfassenden Kamerasystems, wobei das Augenmodell eine Nachbildung (12, 14) mindestens einer Augenstruktur umfasst, wobei die Nachbildung fluoreszierendes Material (12a, 14a) enthält, wobei die Verwendung das Anregen des fluoreszierenden Materials mittels eines auf das Augenmodell gerichteten Spaltstrahls (24) und das Aufnehmen eines Bilds der Nachbildung (12, 14) aus dem emittierten Fluoreszenzlicht mittels der Scheimpflug-Kamera umfasst.

2. Verwendung nach Anspruch 1, **dadurch gekennzeichnet, dass** die Nachbildung (12, 14) eine Kornea oder/und eine Augenlinse oder/und einen Glaskörper geometrisch modelliert.

3. Verwendung nach Anspruch 1 oder 2, **dadurch gekennzeichnet, dass** die Nachbildung aus einem Material, insbesondere Kunststoffmaterial, ohne wesentliche Volumenstreuung gebildet ist.

4. Verwendung nach einem der Ansprüche 1 bis 3, **dadurch gekennzeichnet, dass** das fluoreszierende Material (12a, 14a) inhomogen in der Nachbildung verteilt ist.

5. Verwendung nach Anspruch 4, **dadurch gekennzeichnet, dass** die Nachbildung (12, 14) mehrere Bereiche unterschiedlicher Konzentration des fluoreszierenden Materials enthält, wobei innerhalb jedes Bereichs das fluoreszierende Material im wesentlichen homogen verteilt ist.

6. Verwendung nach Anspruch 4 oder 5, **dadurch gekennzeichnet, dass** die Nachbildung mindestens einen Bereich besitzt, in dem die Konzentration des fluoreszierenden Materials durch einen Gradienten gekennzeichnet ist.

## Claims

1. Use of an eye model for checking a camera system used in ophthalmological measurements and comprising a Scheimpflug camera (22) and a slit projector (20), wherein the eye model comprises a simulation (12, 14) of at least one eye structure, wherein the simulation contains fluorescent material (12a, 14a), wherein the use comprises exciting the fluorescent material by means of a slit beam (24) directed onto the eye model and recording an image of the simulation (12, 14) from the emitted fluorescent light by means of the Scheimpflug camera.

2. Use according to claim 1, **characterised in that** the simulation (12, 14) models a cornea or/and a human lens or/and a vitreous body geometrically.

3. Use according to claim 1 or 2, **characterised in that** the simulation is formed from a material, in particular plastic material, without substantial volume scattering.

4. Use according to one of the claims 1 to 3, **characterised in that** the fluorescent material (12a, 14a) is inhomogeneously distributed in the simulation.

5. Use according to claim 4, **characterised in that** the simulation (12, 14) contains several regions of varying concentration of the fluorescent material, the fluorescent material being substantially homogeneously distributed within each region.

6. Use according to claim 4 or 5, **characterised in that** the simulation possesses at least one region in which the concentration of the fluorescent material is **characterised by** a gradient.

## Revendications

1. Utilisation d'un modèle d'oeil pour contrôler un système de caméra utilisé dans le cadre de mesures ophtalmologiques et comprenant une caméra Scheimpflug (22) et un projecteur à fente (20), ledit modèle d'oeil comportant une reproduction (12, 14) d'au moins une structure de l'oeil, ladite reproduction contenant une matière fluorescente (12a, 14a), ladite utilisation comportant l'excitation de la matière fluorescente au moyen d'un faisceau de fente (24) dirigé sur le modèle d'oeil et la capture au moyen de ladite caméra Scheimpflug d'une image de la reproduction (12, 14) à partir de la lumière fluorescente émise.

2. Utilisation selon la revendication 1, **caractérisée en ce que** la reproduction (12, 14) modélise géométriquement une cornée ou/et une lentille ophtalmique ou/et corps cristallin.

3. Utilisation selon les revendications 1 ou 2, **caractérisée en ce que** la reproduction est formée à partir d'une matière, en particulier d'une matière synthétique, sans transluminescence notoire.

4. Utilisation selon l'une des revendications 1 à 3, **caractérisée en ce que** la matière fluorescente (12a, 14a) est répartie de manière non homogène dans la reproduction.

5. Utilisation selon la revendication 4, **caractérisée en ce que** la reproduction (12, 14) contient plusieurs zones de matière fluorescente de concentration différente, la matière fluorescente étant, à l'intérieur de chacune de ces zones, répartie pour l'essentiel de manière homogène dans la reproduction.

6. Utilisation selon les revendications 4 ou 5, **caractérisée en ce que** la reproduction possède au moins une zone dans laquelle la concentration de la matière fluorescente est **caractérisée par** un gradient.
